# EUROPÄISCHE PATENTANMELDUNG

(11) **EP 4 050 435 A1**
(43) Veröffentlichungstag der Anmeldung: **31.08.2022**
(21) Anmeldenummer: 21159613.5
(22) Anmeldetag: 26.02.2021
(51) Int. Cl.: G05B 19/00, G10L 15/00, G06F 40/30

(54) **NLU-BASIERTE SYSTEME UND VERFAHREN ZUR ERLEICHTERTEN STEUERUNG VON INDUSTRIELLEN ASSETS**

(71) Anmelder: Siemens Aktiengesellschaft, 80333 München (DE)
(72) Erfinder: Krüger, Daniel, 91154 Roth (DE); Kubo, Florian, 97727 Fuchsstadt (DE); Schubert, Martina, 90518 Altdorf (DE)

(57) **Zusammenfassung**

Die Erfindung betrifft ein computerausführbarer Natural-Language-Understanding-Konfigurationsgenerator, welcher dazu konfiguriert ist, eine Natural-Language-Understanding-Konfiguration (121) für eine Natural-Language-Understanding-Komponente (12) auf der Grundlage von auf ein Asset (2) einer Automatisierungsanlage bezogenen Engineering-Daten (ED) zu generieren.

## Beschreibung

Die Erfindung betrifft einen Natural-Language-Understanding-Konfigurationsgenerator zum Generieren einer Natural-Language-Understanding-Konfiguration und ein computerimplementiertes Verfahren, bei welchem eine solche NLU-Konfiguration generiert wird.

Darüber hinaus betrifft die Erfindung ein computerlesbares Medium mit einem NLU-Konfigurationsgenerator der vorgenannten Art und ein System, welches diesen ausführen kann.

Außerdem betrifft die Erfindung eine computerausführbare Natural-Language-Understanding-Komponente umfassend eine NLU-Konfiguration der oben genannten Art.

Ferner betrifft die Erfindung ein Sprachverarbeitungssystem für eine Bedienschnittstelle eines Assets einer Automatisierungsanlage umfassend eine Natural-Language-Understanding-Komponente der oben genannten Art.

Obendrein betrifft die Erfindung eine Bedienschnittstelle mit einem solchen Sprachverarbeitungssystem und einer Verwendung einer solchen Bedienschnittstelle zu einer sprachgestützten Steuerung eines Assets einer Automatisierungsanlage.

Die automatische Spracherkennung (engl. Automatic speech recognition oder kurz: ASR) ist ein Bereich der Informatik, künstlichen Intelligenz und Linguistik, der sich mit der Umwandlung von Audiodaten, die natürliche Sprache enthalten, in für diese Sprache repräsentative Textdaten befasst. In ähnlicher Weise ist das Natural Language Understanding (kurz: NLU) ein Bereich der Informatik, der künstlichen Intelligenz und der Linguistik, in dem es darum geht, Computern die Möglichkeit zu geben, aus Texteingaben, die natürliche Sprache enthalten, eine Bedeutung abzuleiten. ASR und NLU werden häufig zusammen als Teil eines Sprachverarbeitungssystems verwendet. Somit kann ein Verarbeitungssystem für gesprochene Sprachen ein ASR-Modul enthalten, das eine Audioeingabe einer Benutzeräußerung empfängt und eine oder mehrere wahrscheinliche Transkriptionen der Äußerung erzeugt. Darüber hinaus kann ein solches Verarbeitungssystem auch ein NLU-Modul enthalten, das eine Texteingabe beispielsweise eine Transkription einer Benutzeräußerung empfängt und auf Grundlage dieser Texteingabe eine semantische Repräsentation erzeugt, aus der ein oder mehrere maschinenerkennbare/-lesbare Befehle abgeleitet werden können. Der maschinenerkennbare Befehl kann dabei beispielsweise durch eine Computeranwendung erkannt und verarbeitet werden. Der Befehl kann beispielsweise in Form einer Kommandozeile, eines Steuerkommandos o.Ä. vorliegen. In einer Automatisierungsanlage kann sich dabei um Steuerkommandos an die Assets der Anlage handeln, beispielsweise um Steuerkommandos an eine CNC-Steuerung, welche z.B. von einem PLC erkannt und ausgeführt werden.

Die Sprachinteraktion mit technischen Systemen basiert also auf dem Zusammenwirken verschiedener Technologien der maschinellen Sprachverarbeitung (Computerlinguistik). Um eine technische Funktion eines Assets, beispielsweise einer industriellen Maschine auszulösen, spricht ein Nutzer bzw. ein Bediener eine entsprechende Äußerung aus. Das akustische Signal wird anschließend mit einem Mikrofon erfasst und gelangt in Form eines digitalen Audiosignals zur Spracherkennungskomponente (ASR), welche die gesprochene Wortfolge in eine maschinenlesbare Zeichenkette umwandelt.

Der nächste Schritt besteht in einer maschinellen Interpretation des Textes mit dem Ziel, die darin transportierte Absicht des Nutzers zu extrahieren. Hierzu dient die Technologie des natürlichen Sprachverständnisses (NLU). Die NLU hat somit die Aufgabe, die hinter einer sprachlichen Äußerung des Bedieners stehende Absicht zu extrahieren, ohne den Bediener zu einer bestimmten formalisierten Ausdrucksform (z.B. Kommandosprache) zu verleiten.

Die Überführung eines Textes in eine semantische Repräsentation umfasst typischerweise drei Prozessschritte: morphologische Analyse, syntaktische Analyse und semantische Analyse.

Der erste Schritt der morphologischen Analyse ist die Zerlegung des Textes in Wörter bzw. sog. Tokens (= Tokenisierung). Leerzeichen, Tabulatoren und Zeilenumbrüche können dabei als Trennzeichen angesehen werden. Punkte, Beistriche, Semikolons und Doppelpunkte sind hingegen abhängig vom Anwendungskontext Trennzeichen oder Teile von Tokens (z.B. Abkürzungen). Ist der Text in eine Sequenz von Tokens zerlegt worden, können die einzelnen Wörter in einem zweiten Schritt auf deren Stammform reduziert werden (= Stammformreduktion der Wörter). Ziel ist die Reduktion der verschiedenen Typen von Tokens. So kann z.B. "schrieb" und "geschrieben" auf den Stamm "schreiben" oder "Heftchen" und "Hefte" auf "Heft" reduziert werden, etc.

Die Syntax beschäftigt sich mit dem Satzbau oder allgemeiner formuliert mit den Beziehungen zwischen den Zeichen. Zur syntaktischen Analyse können beispielsweise folgende Schritte gehören: Finden von Satzgrenzen; Part-of-Speech (POS) Tagging (= Satzteil-Auszeichnung); Phrase Recognition (= Ausdrucks-Erkennung); Parsing (= grammatikalische Analyse). Beim Finden von Satzgrenzen beispielsweise wird festgestellt, wann ein Interpunktionszeichen Teil des Satzes oder Ende des Satzes ist. Beim POS-Tagging werden die verschiedenen Satzteile und Ausdrucksformen mit ihren Wortarten ausgezeichnet (z.B. Substantiv, Verb, Adjektiv, Adverb, Konjunktion, aber auch Fremdwörter, Kardinalnummern). Dazu können zwei Informationsquellen eingesetzt werden: Lexika (Wörter und Wortarten) und syntagmatische Informationen (häufige auftretende Sequenzen von Wortarten). Phrase Recognition hat die Aufgabe, die identifizierten Wörter zu Wortgruppen bzw. Phrasen zusammenzufassen und kann als partielle grammatikalische Analysen angesehen werden. Eine Sonderstellung nimmt dabei die Named Entity Recognition ein, welche feststehende Bezeichner (z.B. Personennamen, Anlagenbezeichner) identifiziert. Die vollständige grammatikalische Analyse kann die Annotation des Satzbaus (u.a. Subjekt, Prädikat, Objekt) und die gezielte Extraktion von Informationen aus bestimmten syntaktischen Einheiten umfassen.

Unter Semantik versteht man die sinnhafte Bedeutung einer sprachlichen Äußerung. Im Rahmen der semantischen Analyse wird kontextuelles Wissen verwendet, um den Text in bedeutungsunabhängige Einheiten zu zerlegen. Dazu kann auch die Auflösung der Doppelsinnigkeit bestimmter Wörter (z.B. "Mutter" als Elternteil oder Maschinenelement) gehören. Als Grundlage hierzu dienen domänenspezifische Ontologien.

Das Ergebnis der durch NLU durchgeführten Interpretation - eine semantische Repräsentation des Textes - dient einem Dialogmanager dazu, die Äußerungen des Nutzers in Bezug zum Nutzungskontext (u.a. Verwendungszweck, Fähigkeiten des Assets etc.) zu setzten. Der Dialogmanager leitet die erkannte Nutzerabsicht sodann in Form einer funktionalen Anfrage an das eine oder mehrere Assets einer Automatisierungsanlage weiter und nimmt ggf. deren Antwort entgegen. Zudem kann er in der Lage sein, ggf. zusätzliche, kontextbezogene Informationen vom Nutzer abzufragen. Um eine sprachliche Rückmeldung an den Nutzer zu senden, wird der beschriebene Prozess in der Gegenrichtung durchlaufen.

Die Rückmeldung des Dialogmanagers gelangt semantisch kodiert zu einer Textgenerierungskomponente, welche daraus eine natürlich sprachliche Äußerung als Zeichenkette erzeugt.

In einem letzten Schritt wandelt eine Sprachsynthesekomponente die Zeichenkette in ein akustisches Signal um, das anschließend über Lautsprecher ausgegeben werden kann.

Spracherkennungssysteme genereller Art sind hinlänglich bekannt. Das US-Patent US 10 679 625 B1 beschreibt ein Spracherkennungssystem, das unter dem Namen "Alexa" bekannt ist. Solche Systeme sind allerdings für einen Gebrauch in dem industriellen Umfeld nicht sehr gut geeignet. Solche Spracherkennungssysteme müssen für den jeweiligen Anwendungsfall individuell konfiguriert und/oder antrainiert werden, z.B. Intents und Entities müssen für jeden neuen Anwendungsfall neu definiert bzw. ermittelt werden. Hierzu werden Beispielphrasen vorgegeben und diese in einem zweiten Schritt häufig noch von Hand annotiert. Dabei wird oft Expertenwissen verwendet. Nach dem Konfigurieren/Trainieren erfolgt eine manuelle Integration in das zu verwendende System, z.B. in eine GUI (für engl.: Graphical User Interface) einer HMI (für engl.: Human-Machine-Interface) einer CNC-Maschine oder in ein Prozessleitsystem

Integrierte Engineering-Lösungen für GUI und Sprache sind auf einfache Sprachkommandos beschränkt, d.h. der Eingabekanal "Sprache" löst letztlich nur Ereignisse aus, die in den klassischen GUI-Bedienelementen hinterlegt sind. Die Sprachinteraktion fungiert also als eine Art Fernsteuerung für die graphische Benutzerschnittstelle, wobei bei den einer Bedienaktion hinterlegten Schrittketten jeder Schritt der Kette einzeln durchlaufen werden muss (z.B. Mausklick auf Schaltfläche "Weiter" wird durch Sprachkommando "Weiter" ersetzt).

Der Hauptnachteil der oben genannten herkömmlichen Anwendungen besteht darin, dass die Interaktionslogik eines Assets, beispielsweise einer industriellen Maschine während des Engineerings mehrfach (für jeden Interaktionskanal) formuliert werden muss, was nicht nur zusätzlichen Arbeitsaufwand nach sich zieht, sondern auch die Wahrscheinlichkeit erhöht, dass hierbei Fehler gemacht werden.

Die Aufgabe der Erfindung kann somit darin gesehen werden, Systeme und Verfahren zur sprachlichen Steuerung im industriellen Umfeld einfacher, benutzerfreundlicher und gleichzeitig weniger fehleranfälliger zu gestalten.

Die Aufgabe wird mit einem computerausführbaren Natural-Language-Understanding-Konfigurationsgenerator, welcher dazu konfiguriert ist, eine Natural-Language-Understanding-Konfiguration für eine Natural-Language-Understanding-Komponente auf der Grundlage von auf ein Asset einer Automatisierungsanlage bezogenen Engineering-Daten zu generieren.

Der NLU-Konfigurationsgenerator ermöglicht somit, die Interaktionslogik eines Assets, insbesondere einer industriellen Maschine, beispielsweise während des Engineerings viel einfacher zu formulieren.

Bei einer Ausführungsform können die Engineering-Daten z.B. einem bspw. bestehenden oder abgeschlossenen Automatisierungsprojekt entnommen werden.

Bei einer Ausführungsform kann vorgesehen sein, dass die Engineering-Daten Daten umfassen, die auf Aufbau, und/oder Funktionsstruktur und/oder Nutzerschnittstellen des Assets bezogen sind.

Bei einer Ausführungsform kann es zweckmäßig sein, wenn der NLU-Konfigurationsgenerator dazu konfiguriert ist, beim Generieren der NLU-Konfiguration aus den Engineering-Daten annotierte Beispiele und Beschreibungen der Daten zu erzeugen, wobei die annotierten Beispiele Sätze umfassen, wobei in den Sätzen Intents, Entities und Entity-Roles gekennzeichnet sind, und die Beschreibungen Wertebereiche, z.B. Gültige Einstellungen für die Temperatur eines Ofens, z.B. 80 bis 200°C oder weitere Begriffe (hoch, niedrig, etc.) und/oder RegEx, z.B. gültige Werte für eine Postleitzahl, etc. umfassen.

Somit kann die NLU-Konfiguration die aus den Engineering-Daten erzeugten, annotierten Beispiele und Beschreibungen der Daten umfassen, wobei die annotierten Beispiele Sätze umfassen, wobei in den Sätzen Intents, Entities und Entity-Roles gekennzeichnet sind, und die Beschreibungen Wertebereiche und/oder RegEx umfassen.

Bei einer Ausführungsform kann es vorgesehen sein, dass die NLU-Konfiguration lokal, z.B. am Ort des Assets gespeichert ist.

Bei einer Ausführungsform kann es zweckdienlich sein, dass die NLU-Konfiguration eine Mehrzahl von Intents umfasst, wobei jeder Intent zumindest eine Entity zugeordnet ist.

Bei einer Ausführungsform kann es zweckdienlich sein, wenn jede Intent als eine atomare Funktion oder als eine Schrittkette ausgebildet ist.

Bei einer Ausführungsform kann vorgesehen sein, dass jeder Entity eine Entity-Rolle zugeordnet ist.

Bei einer Ausführungsform kann es vorgesehen sein, dass die NLU-Konfiguration zumindest ein Profil, bei welchem Wirkbereiche eingeschränkt sind, und/oder Daten hinsichtlich Zugriffsrechte umfasst.

Bei einer Ausführungsform kann es zweckdienlich sein, wenn der NLU-Konfigurationsgenerator ferner dazu konfiguriert ist, beim Generieren der NLU-Konfiguration historische Daten, beispielsweise Steuerungsdaten, in der Vergangenheit eingestellte Temperaturwerte, etc. zu verwenden. Darüber hinaus kann (mittels des NLU-Konfigurationsgenerators) anschließend eine Prüfung der Richtigkeit und der Vereinbarkeit der historischen Daten innerhalb des aktuellen Automatisierungssystems erfolgen.

Die Aufgabe wird außerdem mit einem computerlesbaren Medium umfassend den vorgenannten computerausführbaren NLU-Konfigurationsgenerator gelöst.

Darüber hinaus wird die Aufgabe mit einem System gelöst, wobei das System zumindest einen Speicher, wobei der zumindest eine Speicher den vorgenannten computerausführbaren NLU-Konfigurationsgenerator aufweist und zumindest einen Prozessor umfasst, wobei der zumindest eine Prozessor mit dem zumindest einen Speicher operativ gekoppelt ist und dazu eingerichtet ist, den NLU-Konfigurationsgenerator auszuführen, wobei der NLU-Konfigurationsgenerator bei der Ausführung durch den zumindest einen Prozessor das System dazu veranlasst, eine NLU-Konfiguration zu generieren.

Ferner wird die Aufgabe mit einer computerausführbaren Natural-Language-Understanding-Komponente umfassend eine mittels des vorgenannten NLU-Konfigurationsgenerators generierte NLU-Konfiguration gelöst.

Bei einer Ausführungsform kann es vorgesehen sein, dass die die Natural-Language-Understanding-Komponente dazu konfiguriert ist, einer Benutzeräußerung entsprechende Texteingabe zu empfangen und auf Grundlage der Texteingabe und unter Zuhilfenahme der Natural-Language-Understanding-Konfiguration eine semantische Repräsentation der Texteingabe zu erzeugen, wobei basierend auf der semantischen Repräsentation der Texteingabe zumindest ein maschinenerkennbarer/-lesbarer Befehl für das Asset erzeugt werden kann.

Außerdem wird die Aufgabe mit einem Sprachverarbeitungssystem für eine Bedienschnittstelle eines Assets einer Automatisierungsanlage umfassend die vorgenannte Natural-Language-Understanding-Komponente gelöst.

Darüber hinaus wird die Aufgabe mit einer Bedienschnittstelle eines Assets für eine Automatisierungsanlage umfassend das vorgenannte Sprachverarbeitungssystem gelöst.

Obendrein wird die Aufgabe mit einem computerimplementierten Verfahren gelöst, bei welchem eine NLU-Konfiguration für eine NLU-Komponente, beispielsweise mittels des vorgenannten NLU-Konfigurationsgenerators automatisch auf der Grundlage von auf das Asset bezogenen Engineering-Daten aus einem Automatisierungsprojekt generiert wird.

Bei einer Ausführungsform kann es vorgesehen sein, dass die NLU-Konfiguration für die NLU-Komponente beispielsweise mittels des vorgenannten NLU-Konfigurationsgenerators während des Engineerings des Assets in einem Engineeringprojekt, welches beispielsweise auf einer Engineeringplattform generiert wird, und/oder basierend auf den Engineering-Daten aus einem bestehenden/abgeschlossenen Automatisierungsprojekt generiert wird. Dies kann beispielsweise dadurch erfolgen, dass die Engineering Daten aus dem bestehenden/abgeschlossenen Automatisierungsprojekt mit ausgeliefert werden. Der Inhaber des bestehenden/abgeschlossenen Automatisierungsprojekts, z.B. Hersteller (OEM) kann sich bestimmte Bausteine auch sichern, die sensible Daten, z.B. sein Know-How enthalten. In solchen sensiblen Daten sind vorzugsweise keine für die NLU relevanten Daten enthalten.

Außerdem wird die Aufgabe dadurch gelöst, die vorgenannte Bedienschnittstelle zu einer sprachgestützten Steuerung eines Assets einer Automatisierungsanlage verwendet wird.

Im Folgenden wird die Erfindung anhand der in den Figuren dargestellten Ausführungsbeispiele näher beschrieben und erläutert. Es zeigen:
- FIG 1: eine industrielle Umgebung, in der Sprachsteuerungssysteme verwendet werden können,
- FIG 2: ein Sprachdialogsystem,
- FIG 3: eine NLU-Engine der NLU-Komponente der FIG 2,
- FIG 4: ein System zum Generieren eines NLU-Modells, und
- FIG 5: ein Flussdiagramm eines Verfahrens zum Generieren eines NLU-Modells.

In den Ausführungsbeispielen und Figuren können gleiche oder gleich wirkende Elemente jeweils mit den gleichen Bezugszeichen versehen sein. Außerdem dienen die Bezugszeichen in den Ansprüchen und in der Beschreibung lediglich zu einem besseren Verständnis der vorliegenden Anmeldung und sollen auf gar keinen Fall als eine Beschränkung des Gegenstands der vorliegenden Erfindung angesehen werden.

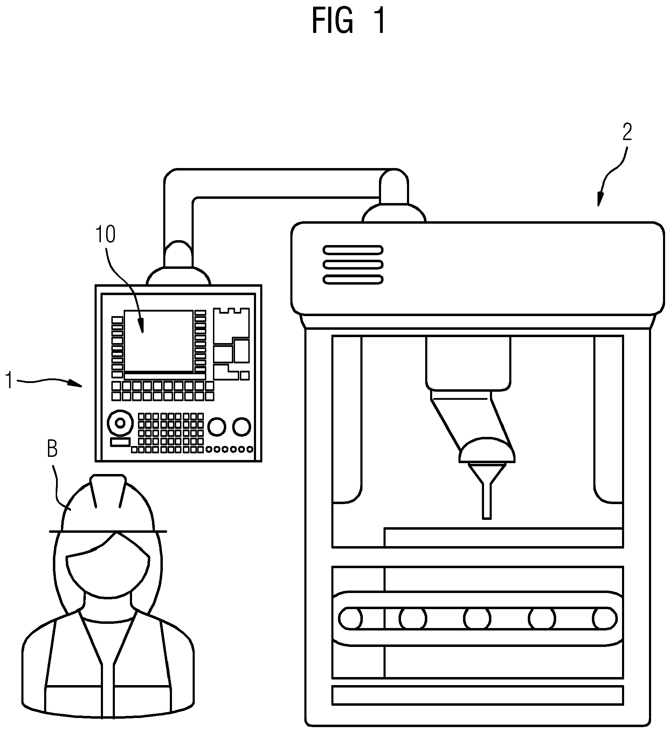

FIG 1 zeigt eine Benutzerin B, die sich vor einer HMI 1 einer Werkzeugmaschine 2 aufhält. Die HMI 1 umfasst ein Sprachsteuerungsprogramm 10, mit dessen Hilfe die Benutzerin B Sprachbefehle abgeben und Rückmeldungen empfangen kann.

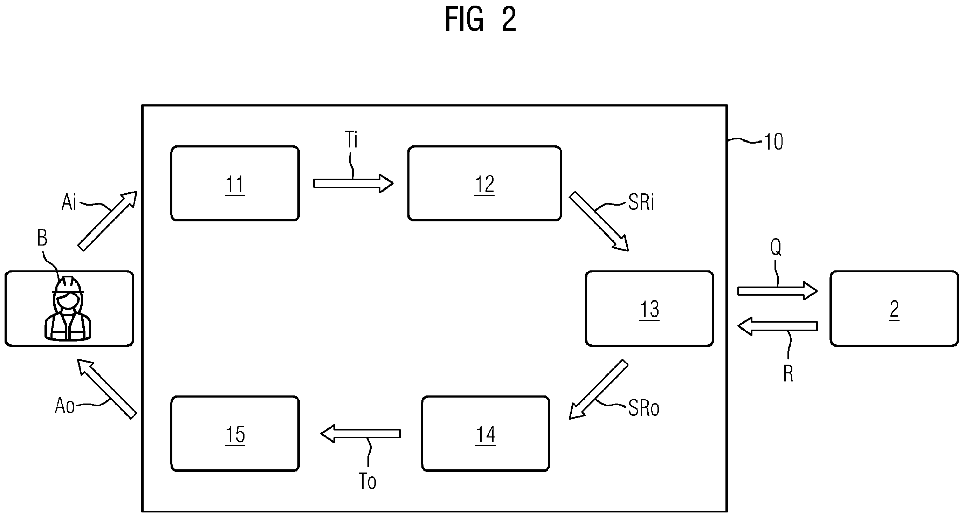

FIG 2 zeigt ein Sprachdialog zwischen der Benutzerin B und der Werkzeugmaschine 2 mittels des Sprachsteuerungsprogramms 10 ablaufen kann. Die Sprachaufnahmemittel (z.B. ein Mikrofon) oder Sprachausgabemittel (z.B. ein Lautsprecher) sind hier der Einfachheit der Darstellung halber nicht gezeigt.

Das Sprachsteuerungsprogramm 10 erhält ein benutzerseitig erzeugtes Audioinput Ai und kann in Reaktion darauf ein Audiooutput Ao erzeugen.

Das Sprachsteuerungsprogramm 10 umfasst mehrere Komponenten: eine ASR-Komponente 11, eine NLU-Komponente 12, eine Dialog-Manager-Komponente 13, eine Textgenerierungskomponente 14 und eine Sprachsynthese-Komponente 15.

Die ASR-Komponente 11 erzeugt aus dem Audioinput Ai einen Text Ti, der an die NLU-Komponente 12 übergeben wird. Die NLU-Komponente 12 erzeugt aus dem Text Ti eine entsprechende semantische Repräsentation SRi, die an die Dialog-Manager-Komponente 13 übermittelt wird. Die Dialog-Manager-Komponente 13 erzeugt aus der semantischen Repräsentation SR des Textes T eine maschinenlesbare Anfrage Q an die Maschine 2. In Reaktion auf die Anfrage Q kann die Dialog-Manager-Komponente 13 eine Rückmeldung R von der Werkzeugmaschine 2 erhalten. Basierend auf der Rückmeldung R erzeugt die Dialog-Manager-Komponente 13 ihre semantische Repräsentation SRo für die Textgenerierungskomponente 14, welche diese in einen für eine Sprachsynthese geeigneten Text umwandelt. Anschließend erzeugt die Sprachsynthesekomponente 15 das Audiooutput Ao, welches an die Benutzerin übermittelt wird.

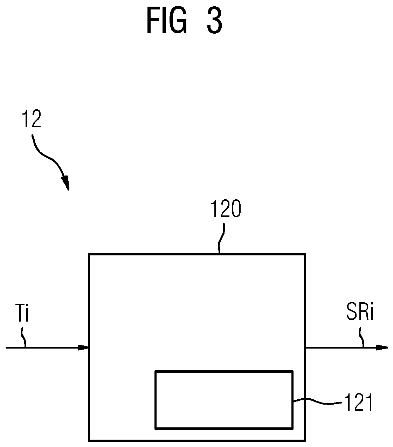

FIG 3 zeigt eine NLU-Engine 120 der NLU-Komponente 12. Darüber hinaus umfasst die NLU-Komponente ein NLU-Modell 121. Das NLU-Modell 121 kann beispielsweise zur Laufzeit der NLU-Engine 120 genutzt werden, um die Texte, wie Ti, zu interpretieren. Sind die eingegebenen Texte völlig unterschiedlich zu dem, was das NLU-Modell 121 kennt, dann können sie nicht interpretiert werden.

Das NLU-Modell 121 kann somit in die HMI 1 integriert sein.

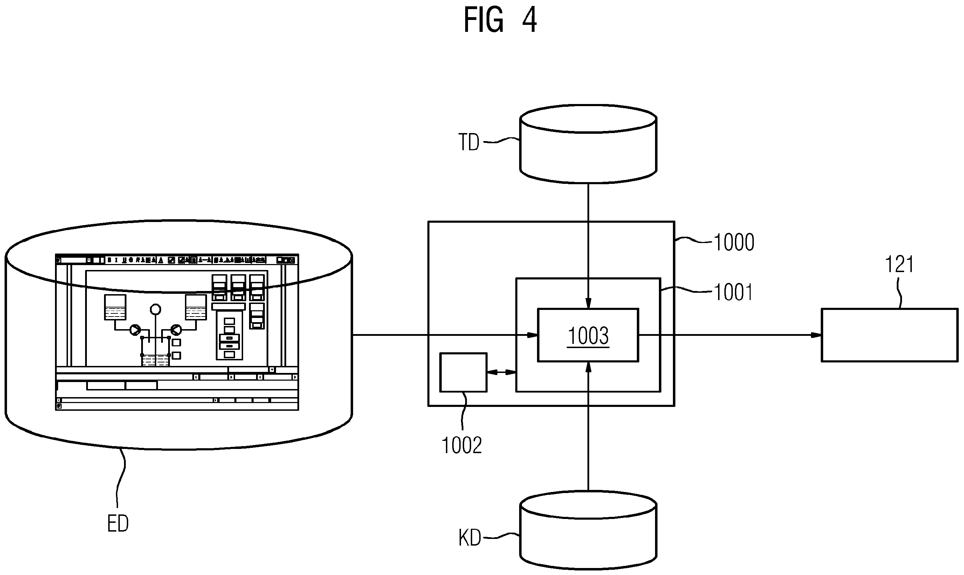

FIG 4 zeigt ein System 1000, das einen nicht-flüchtigen Speicher 1001 und einen mit dem Speicher operativ verbundenen Prozessor 1002, z.B. CPU, umfasst. Auf dem Speicher 1001 ist ein NLU-Konfigurationsgenerator 1001 gespeichert, der dazu konfiguriert ist, das NLU-Modell 121 zu generieren.

Zum Generieren des NLU-Modells 121 verwendet der NLU-Konfigurationsgenerator 1003 Engineering-Daten ED. Außerdem kann der NLU-Konfigurationsgenerator 1003 noch weitere Daten, beispielsweise generische NLU-Modell-Trainingsdaten TD und/oder sprachspezifische Konfigurationen KD verwenden. Diese Daten kann das System 1000 über eine oder mehrere Schnittstellen beziehen bzw. zur Verfügung gestellt bekommen.

Wenn der Prozessor 1002 die in dem NLU-Konfigurationsgenerator 1003 enthaltenen Befehle abarbeitet, werden aus den Engineering-Daten ED beispielsweise annotierte Beispiele und Datenbeschreibungen generiert. Die annotierten Beispiele sind Sätze in denen beispielsweise Intents, Entieties und Roles gekennzeichnet sind. Beschreibungen der Daten sind beispielweise Wertebereiche und RegEx.

Die Engineering-Daten ED können beispielsweise jene Daten sein, die beim Engineering der Werkzeugmaschine 2 in einem Engineeringprojekt entstanden sind.

Des Weiteren können die Engineering-Daten ED historische Daten, z.B. historische Daten betreffend ähnliche Werkzeugmaschinen, ihr Engineering und/oder ihren Betrieb (z.B. meist verwendete Befehle etc.)

Der NLU-Konfigurationsgenerator 1003 kann auch zeitgleich mit einem Engineering ausgeführt werden, sodass das NLU-Modell generiert wird, währen die Werkzeugmaschine 2 ihre Engineering-Phase durchläuft.

Ein Intent ist beispielsweise eine auszulösende Funktion der Werkzeugmaschine 2. Die Intents können beispielsweise aus Bezeichnern an der GUI, Schnittstellendefinitionen und Methodenaufrufen im Programmcode sowie der Schaltstruktur der Maschine 2 bzw. ihren Steuerungscodes abgeleitet werden.

Bei einem Intent kann es sich sowohl um eine atomare Funktion als auch um eine Schrittkette handeln.

Beispiele der Intents sind: "Zuführung leerfahren", "Tank spülen"

Entities stellen Parameter des Funktionsaufrufs dar. Die Entities können basierend auf Bezeichnern in der Oberfläche, welche zur Werteeingabe (z.B. Checkbox, Textbox, Slider) dienen generiert werden. Zusätzlich können auch Schnittstellenbeschreibungen, Kommentare im Programmcode und Standards herangezogen werden. Wertebereiche der von Eingabeparametern (z.B. Namen der Bildschirmmasken, Wertebereiche von Tags, Konfiguration der Netzwerkinfrastruktur) können ebenfalls mit generiert werden.

Zum Beispiel: "Zuführung 1 leerfahren", "Tank spülen" oder "Bei Ofentemperatur größer als 1000°C benachrichtigen."

Wenn ein Parameter in einem Intent mehrfach vorkommt, dann kann eine Rolle jedes Parameters ermittelt werden. Diese Informationen können aus der Struktur, der Bedienoberflächen und der Schnittstellendefinitionen abgeleitet werden.

Beispiel: "Plane Stillstand zwischen 13:00 und 15:00 Uhr ein".

Hier ist die Uhrzeit einmal in der Rolle Startzeitpunkt und einmal in der Rolle Endzeitpunkt.

Über die Struktur eines Engineeringprojekts können - gerade bei großen Maschinen - Wirkbereiche eingeschränkt werden, da nicht jede Sprachinteraktion ist an jeder Stelle/jedem Ort sinnvoll sein mag.

Darüber hinaus kann der NLU-Konfigurationsgenerator 1003 aus den Engineering-Daten ED daten betreffend Zugriffsrechte verwenden, so dass in dem NLU-Modell 121 die Zugriffsrechte berücksichtigt werden. Da z.B. fehlende Zugriffsrechte auf eine Bildschirmmaske (Bildschirmdialog: Ein Dialog, Dialogfeld, Dialogfenster oder Dialogbox ist ein Element der grafischen Benutzeroberfläche) auch bedeutet, dass eine bestimmte Funktion der Werkzeugmaschine 2 nicht vom angemeldeten Anwender, z.B. von der Benutzerin B, über Sprache genutzt werden kann oder dass ein Wert zwar gelesen, nicht aber geändert werden darf.

Darüber hinaus kann der NLU-Konfigurationsgenerator 1003 aus Engineering-Daten ED ableitet, welche Funktionen der Werkzeugmaschine 2 nicht direkt über Sprache ausführbar sein sollen. Im Zweifel kann das Ausschließen bestimmter Funktionen manuell durchgeführt werden. Per Default könnte auch festlegt werden, dass die Werte, wie z.B. eine Ofentemperatur, etc. (siehe oben), nur in die Oberfläche übernommen werden. Um die Werte dann aktiv zu schalten ist ein zweiter Schritt über einen anderen Interaktionskanal (z.B. Touch, Geste) notwendig.

Das erzeugte NLU-Modell 121 kann zum Nachrüsten einer Sprachinteraktion bei anderen Werkzeugmaschinen 2 des gleichen Typs verwendet werden.

Das NLU-Model 121 kann auch ein universelles, für alle Werkzeugmaschine geltendes NLU-Submodell umfassen, welches auf universelle Funktionen, die bei beinahe jeder Werkzeugmaschine vorhanden sind, berücksichtigt.

Durch das automatische Generieren der NLU-Modelle aus Engineering-Daten ist die Sprachinteraktion mit der Maschine immer konsistent.

Eine nachtägliche Integration in Bedienschnittstelle ist nicht notwendig, da sie Sprachinteraktion ein integraler Bestandteil ist. Das reduziert den Aufwand und vermeidet Fehler.

Das Lernen von Synonymen während der Laufzeit erleichtert die Konfiguration und stellt eine höhere Zufriedenheit der Anwender sicher. Außerdem entfällt ein häufiger Upload der Anwendung und den damit verbundenen Ausfallzeiten.

Durch das Verwenden von Dictionaries kann die Sprachinteraktion auch ein einer Fremdsprache stattfinden.

Die Interaktionslogik der Maschine kann nur einmal an einer zentralen Stelle definiert werden. Dies vermeidet Fehler und führt zu einer gesteigerten Effizienz im Entwicklungsprozess.

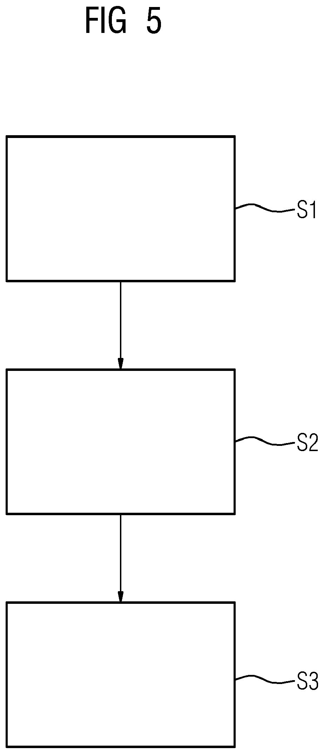

FIG 5 zeigt ein Flussdiagramm eines beispielhaften Verfahrens zum Generieren des NLU-Modells 121.

In einem Schritt S1 können dem NLU-Konfigurationsgenerator 1003 über eine Schnittstelle Engineering-Daten ED bereitgestellt werden.

In einem Schritt S2 wird das NLU-Modell 121 mittels des NLU-Konfigurationsgenerators 1003 generiert.

In einem Schritt S3 kann das NLU-Modell 121 bereitgestellt werden. Das NLU-Modell 121 kann beispielsweise in einem Speicher in der HMI 1 gespeichert werden oder als ein Software-Modul in die NLU-Komponente 12 des Steuerungsprogramms 10 integriert werden, das ebenfalls in der Bedienschnittstelle 1 der Werkzeugmaschine 2 gespeichert sein kann.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Computerausführbarer Natural-Language-Understanding-Konfigurationsgenerator, welcher dazu konfiguriert ist, eine Natural-Language-Understanding-Konfiguration (121) für eine Natural-Language-Understanding-Komponente (12) auf der Grundlage von auf ein Asset (2) einer Automatisierungsanlage bezogenen Engineering-Daten (ED) zu generieren.

2. NLU-Konfigurationsgenerator nach Anspruch 1, wobei die Engineering-Daten (ED) Daten umfassen, die auf Aufbau, und/oder Funktionsstruktur und/oder Nutzerschnittstellen des Assets bezogen sind.

3. NLU-Konfigurationsgenerator nach Anspruch 1 oder 2, wobei NLU-Konfigurationsgenerator (1003) dazu konfiguriert ist, beim Generieren der NLU-Konfiguration (121) aus den Engineering-Daten (ED) annotierte Beispiele und Beschreibungen der Daten zu erzeugen, wobei die annotierten Beispiele Sätze umfassen, wobei in den Sätzen Intents, Entities und Entity-Roles gekennzeichnet sind, und die Beschreibungen Wertebereiche und/oder RegEx umfassen.

4. NLU-Konfigurationsgenerator nach Anspruch 3, wobei jede Intent als eine atomare Funktion oder als eine Schrittkette ausgebildet ist.

5. NLU-Konfigurationsgenerator nach Anspruch 3 oder 4, wobei jeder Entity eine Entity-Rolle zugeordnet ist.

6. NLU-Konfigurationsgenerator nach einem der Ansprüche 1 bis 5, wobei die NLU-Konfiguration (121) zumindest ein Profil, bei welchem Wirkbereiche eingeschränkt sind, und/oder Daten hinsichtlich Zugriffsrechte umfasst.

7. NLU-Konfigurationsgenerator nach einem der Ansprüche 1 bis 6, wobei der NLU-Konfigurationsgenerator (1003) ferner konfiguriert ist, beim Generieren der NLU-Konfiguration (121) historische Daten, beispielsweise Steuerungsdaten zu verwenden.

8. Computerlesbares Medium umfassend einen computerausführbaren NLU-Konfigurationsgenerator (1003) nach einem der Ansprüche 1 bis 7.

9. System umfassend zumindest einen Speicher (1001), wobei der zumindest eine Speicher (1001) einen computerausführbaren NLU-Konfigurationsgenerator (1003) nach einem der Ansprüche 1 bis 7 aufweist, und zumindest einen Prozessor (1002), wobei der zumindest eine Prozessor (1002) mit dem zumindest einen Speicher (1001) operativ gekoppelt ist und dazu eingerichtet ist, den NLU-Konfigurationsgenerator (1003) auszuführen, wobei der NLU-Konfigurationsgenerator (1003) bei der Ausführung durch den zumindest einen Prozessor (1002) das System (1000) dazu veranlasst, eine NLU-Konfiguration (121) zu generieren.

10. Computerausführbare Natural-Language-Understanding-Komponente umfassend eine mittels eines NLU-Konfigurationsgenerators (1003) nach einem der Ansprüche 1 bis 7 generierte NLU-Konfiguration (121).

11. Sprachverarbeitungssystem für eine Bedienschnittstelle (1) eines Assets (2) einer Automatisierungsanlage umfassend eine Natural-Language-Understanding-Komponente (12) nach Anspruch 10.

12. Bedienschnittstelle eines Assets (2) für eine Automatisierungsanlage umfassend ein Sprachverarbeitungssystem (10) nach Anspruch 11.

13. Computerimplementiertes Verfahren, bei welchem eine NLU-Konfiguration (121) für eine NLU-Komponente (12) automatisch auf der Grundlage von auf das Asset bezogenen Engineering-Daten (ED) aus einem Automatisierungsprojekt generiert wird.

14. Verfahren nach Anspruch 13, wobei die NLU-Konfiguration (121) für die NLU-Komponente (12) während des Engineerings des Assets (2) in einem Engineeringprojekt und/oder basierend auf den Engineering-Daten aus einem bestehenden/abgeschlossenen Automatisierungsprojekt generiert wird.

15. Verwendung einer Bedienschnittstelle nach Anspruch 12 zu einer sprachgestützten Steuerung eines Assets einer Automatisierungsanlage.
